Europäisches Patentamt

European Patent Office

Office européen des brevets

(19)

(11) Veröffentlichungsnummer: **0 136 520**
**B1**

(12) **EUROPÄISCHE PATENTSCHRIFT**

(45) Veröffentlichungstag der Patentschrift:
25.10.89

(21) Anmeldenummer: **84110087.8**

(22) Anmeldetag: **23.08.84**

(51) Int. Cl.⁴: **G 01 N 21/59**, G 01 J 1/42

(54) Einrichtung zum Aufnehmen densitometrischer Werte von einem Kontrollstreifen.

(30) Priorität: **25.08.83 IT 483583**

(43) Veröffentlichungstag der Anmeldung:
**10.04.85 Patentblatt 85/15**

(45) Bekanntmachung des Hinweises auf die Patenterteilung:
**25.10.89 Patentblatt 89/43**

(84) Benannte Vertragsstaaten:
**CH DE FR GB IT LI NL**

(56) Entgegenhaltungen:
**BE-A-849 338**
**FR-A-1 200 742**
**FR-A-1 529 112**
**US-A-3 141 727**
**US-A-3 367 230**
**US-A-3 995 958**
**US-A-4 110 610**

(73) Patentinhaber: **Viptronic GmbH, Plosestrasse 102,
I-39042 Brixen (IT)**

(72) Erfinder: **Pallingen, Hans- Godehard, Oberdorf 80,
I-39040 Vahrn (IT)**

(74) Vertreter: **Schaumburg, Thoenes & Englaender,
Mauerkircherstrasse 31 Postfach 86 07 48, D-8000
München 80 (DE)**

EP 0 136 520 B1

## Beschreibung

Die Erfindung betrifft eine Einrichtung der im Oberbegriff des Anspruches 1 genannten Art.

Der Kontrollstreifen gibt die zur Herstellung eines farbigen Bildes, beispielsweise eines Druckbogens, verwendeten Farben wieder. Die Farbdichte der einzelnen Farbfelder des Kontrollstreifens kann mit Hilfe eines Densitometers gemessen werden. Für die Auswertung jeder Messung ist es erforderlich, daß zu jedem ermittelten Wert auch das zugehörige Farbfeld, d. h. also der Meßort auf dem Kontrollstreifen, bekannt ist.

Es ist schon eine Einrichtung der gattungsgemäßen Art bekannt, bei welcher das Densitometer für jede Messung automatisch entlang dem Kontrollstreifen verfahren wird. Dabei wird der gesamte Kontrollstreifen Feld für Feld ausgemessen. Um den Meßort bestimmen zu können, ist das Densitometer so ausgebildet, daß es die Farbfeldgrenzen erkennen und so die überfahrenen Farbfelder zählen kann. Es handelt sich dabei um ein verhältnismäßig aufwendiges System, welches im allgemeinen nur bei automatischen Densitometer-Anlagen eingebaut wird, wie sie beispielsweise in großen Druckereien zur Überwachung mehrerer Druckmaschinen verwendet werden. Als weiterer Nachteil der bekannten Einrichtung wird angesehen, daß wegen der Verwendung des Zählprinzips zur Meßortbestimmung das Densitometer bei jeder Messung von einer Anfangsstellung aus über den Kontrollstreifen bis zu dem gewünschten Meßort verfahren werden muß. Der Meßort ergibt sich demnach als Relativposition, welche auf eine ganz bestimmte Anfangsposition bezogen ist, die bei jedem Meßvorgang zuerst aufgesucht werden muß. Die bekannte Einrichtung kann deshalb insbesondere nicht in Verbindung mit einem Handdensitometer verwendet werden, dessen Vorteil es gerade ist, daß es jederzeit unmittelbar auf ein beliebiges Farbfeld aufgesetzt werden kann, dessen Farbwerte densitometrisch gemessen werden sollen (z. B. Prospekt KOEBAU-DENSITRONIC der Fa. König & Bauer AG, Würzburg, Nr. 039/82 d).

Durch die US-A-3 141 727 ist auch schon eine Einrichtung zur Farbdichtemessung bekannt, bei der zwar ein Handdensitometer verwendet werden kann, wobei dieses jedoch stationär in der Meßmaschine installiert und der Meßstreifen für jeden Meßvorgang relativ zum Densitometer mittels einer Transporteinrichtung bewegt wird. Auch hier ist der jeweilige Meßort durch den Weg bestimmt, den der Meßstreifen von einer definierten Anfangsposition aus zurücklegt.

Die US-A-3 995 958 zeigt eine Farbdichtemeßeinrichtung, bei welcher ein Densitometer automatisch entlang einem auf ein Druckerzeugnis aufgebrachten Meßstreifen verfahren wird. Der jeweilige Meßort ergibt sich wiederum aus der Zählung der Verfahrschritte von einem definierten Ausgangspunkt aus, zu welchem das Druckerzeugnis exakt ausgerichtet werden muß.

Es ist die Aufgabe der vorliegenden Erfindung, eine Einrichtung der gattungsgemäßen Art zu schaffen, welche ohne die Verwendung aufwendiger Zähleinrichtungen auskommt und welche auch die Vermessung und Meßortbestimmung einzelner Farbfelder des Kontrollstreifens erlaubt, ohne daß das Densitometer bei jeder Messung von einem bestimmten Ausgangspunkt aus über den gesamten Kontrollstreifen geführt wird.

Diese Aufgabe ist erfindungsgemäß durch die Merkmale des Anspruches 1 gelöst.

Dem Auflagetisch ist eine Anordnung von Absolutpositionsgebern mit einem dem Verlauf des Kontrollstreifens entsprechenden Verlauf zugeordnet. Diese Anordnung ist so getroffen, daß bei auf den Auflagetisch aufgelegtem und auf diesem ausgerichtetem Kontrollstreifenträger den einzelnen Farbfeldern des Kontrollstreifens jeweils bestimmte Absolutpositionsgeber entsprechen. Wenn das Densitometer über ein bestimmtes Farbfeld geführt wird, gibt der entsprechende Absolutpositionsgeber ein Signal ab, welches zur Bestimmung des Meßortes in der Auswerteeinrichtung verwendet werden kann. Derartige Absolutpositionsgeber lassen sich technisch sehr einfach und preiswert darstellen. Die erfindungsgemäße Einrichtung erlaubt es, jeden Meßort absolut zu bestimmen, so daß ein zeitaufwendiges Abfahren des Kontrollstreifens von einem bestimmten Anfangspunkt bis zu dem gewünschten Meßort bei jeder Messung nicht mehr erforderlich ist. Die erfindungsgemäße Einrichtung kann insbesondere auch in Verbindung mit einfachen und billigen Handdensitometern verwendet werden, deren Vorteil gerade darin liegt, daß sie unmittelbar auf einen gewünschten Meßort aufgesetzt werden können.

In einer Ausgestaltung der Erfindung ist vorgesehen, daß am Densitometer nahe seinem Lesekopf ein Magnet angeordnet ist und die Absolutpositionsgeber mit der Auswerteeinrichtung elektrisch verbundene, elektromagnetische Sensoren sind. Sowohl die elektromagnetischen Sensoren als auch der Magnet stellen sehr einfache und billige handelsübliche Bauteile dar, welche zudem sehr unempfindlich und damit wartungsfreundlich sind.

Die Absolutspositionsgeber sind vorzugsweise unterhalb des Auflagetisches und in einer Reihe parallel zu dem Kontrollstreifen angeordnet. Durch die Anordnung unterhalb des Auflagetisches sind sie den in einem Druckereibetrieb im allgemeinen unvermeidlichen Verschmutzungen nicht ausgesetzt. Es muß dabei lediglich gewährleistet sein, daß eine Aktivierung der Absolutpositionsgeber durch den Auflagetisch hindurch möglich ist.

Die Marken zum Ausrichten des Kontrollstreifenträgers können erfindungsgemäß als optische Markierungen oder auch als Anschläge ausgebildet sein.

Die erfindungsgemäße Einrichtung kann grundsätzlich Densitometer beliebiger Bauart umfassen. In einer bevorzugten Ausgestaltung der Erfindung ist jedoch vorgesehen, daß das Densitometer ein Handdensitometer ist, welches an eine stationäre Auswerteeinrichtung angeschlossen ist. Damit bleibt der Vorteil des einfachen, leicht zu handhabenden Handdensitometers voll erhalten, während gleichzeitig die Leistungen einer im allgemeinen sehr viel teureren automatischen Densitometeranlage erreicht werden. Der Bedienungsmann der Druckmaschine kann direkt an dieser in jedem für zweckmäßig gehaltenen Augenblick und an exakt dem Ort des Kontrollstreifens, welcher vom Bedienungsmann auf Grund seiner Erfahrung mit der zu prüfenden Maschine und mit dem für den Druckbogen verwendeten Material ausgewählt wurde, seine Messung durchführen.

Die Auswerteeinrichtung umfaßt vorzugsweise einen Tischrechner, einen Drucker und einen Bildschirm. Der Tischrechner (vorzugsweise ein Basicrechner) weist einen Speicher auf, so daß er die Zeit, das Datum, technische Daten der Druckmaschine, Nummer der Meßreihe sowie andere für das vom Drucker ausgegebene Protokoll wesentliche Angaben zur Verfügung stellen kann. Außerdem soll er früher erfaßte Daten oder Vergleichsdaten auf dem Bildschirm sichtbar machen, welche die Interpretation der neu gemessenen Daten erleichtern sollen. Auf dem Bildschirm erscheinen außer den "Protokoll-Daten" die sichtbar gemachten Daten des Kontrollstreifens mit Bezug auf eine horizontale Linie 0 und zwei dieser benachbarte Streifen, welche das zu beachtende, variable Toleranzfeld begrenzen, so daß die Bedienungsperson sofort eventuelle "Punkte" feststellen kann, die aus dem Toleranzband herausfallen; auf dem Bildschirm erscheint außerdem eine Referenzangabe zu den Meßorten, welche den Aufzeichnungspunkten in der Druckmaschine entsprechen.

Die Person, welche das Handdensitometer bedient, wird vorzugsweise die Bereiche des Kontrollstreifens überwachen, von denen sie nach ihrer Erfahrung und Kenntnis der Druckmaschine sowie des Materials weiß, daß eine gewisse Wahrscheinlichkeit dafür besteht, daß sie aus dem vorgegebenen, gespeicherten Toleranzband herausfallen. Die Bedienungsperson kann nach Ausführung von Änderungen oder Regulierungen die Meßwerte mit früher gespeicherten Werten vergleichen, um in möglichst kurzer Zeit auf das erwünschte Qualitätsniveau zu kommen (welches in Form von gespeicherten Soll-Daten vorliegt) und um dieses Niveau für die Zeit mehrerer Meßdurchgänge durch ständige Reguliereingriffe an der Druckmaschine erhalten zu können.

Dadurch, daß der Speicher des Rechners mit Daten der Druckmaschine beliefert wird, ist die Möglichkeit der Herstellung eines Protokolls mittels des Druckers gegeben, sobald eine Meßwerterfassung durchgeführt wird, wodurch ein unwiderlegbares Dokument bereitgestellt wird, welches zur Bestimmung der Qualität eines bestimmten Loses von Druckbogen und zum Nachweis der durchgeführten Arbeit dienen kann.

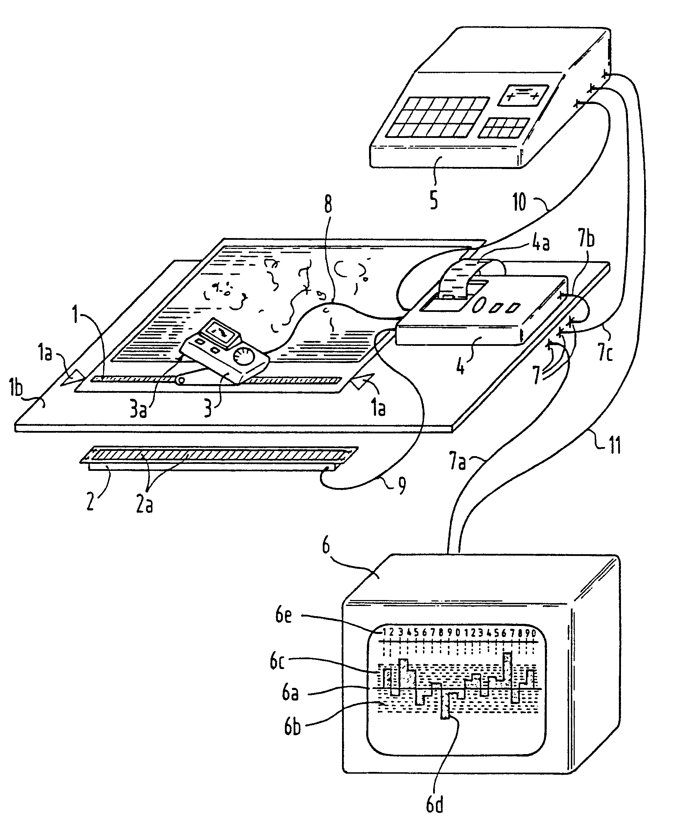

In einem Ausführungsbeispiel ist die erfindungsgemäße Einrichtung in Verbindung mit einem Handdensitometer dargestellt und beschrieben. Die Figur zeigt eine schematische Darstellung einer Einrichtung mit einem Auflagetisch, einem Handdensitometer, einer dem Auflagetisch zugeordneten Anordnung von Absolutpositionsgebern sowie einer an das Handdensitometer und die Absolutpositionsgeber angeschlossenen Auswerteeinheit.

Der Druckbogen wird auf einen Auflagetisch 1b aufgelegt; sein Kontrollstreifen 1 wird mittels der optischen Markierungen 1a exakt positioniert. In Übereinstimmung mit der Position des Kontrollstreifens 1 ist unterhalb des Auflagetisches 1b eine Anordnung 2 von elektromagnetischen Sensoren 2a vorgesehen; diese werden durch den am Handdensitometer 3 nahe dem Lesekopf angeordneten Magneten 3a bei jeder mittels des Handdensitometers 3 ausgeführten Messung aktiviert und geben elektronische Impulse an die mit dem Handdensitometer verbundenen Geräte 4, 5, 6, wodurch man eine geschriebene Anzeige der Meßposition auf dem vom Drucker 4 ausgegebenen Protokoll 4a, eine Anzeige der Position auf dem Bildschirm 6 und einen Vergleich mit Sollmeßwerten oder früher aufgenommenen und im Rechner 5 gespeicherten Meßwerten erhält. Das Handdensitometer 3 kann von bekannter Art sein; es ist mit einem Verbindungskabel 8 und einem Magneten 3a versehen. Wenn es sich in einer Position für eine optische Meßwertaufnahme befindet, aktiviert der Magnet 3a die mit dem Drucker 4 über Kabel 9 verbundenen Magnetsensoren 2a. Der Drucker ist mit einer Schnittstelle (RS 232 C) gekoppelt und mittels der Kabel 10, 11 mit dem Rechner 5 und dem Bildschirm 6 verbunden. Die elektronischen Geräte 2, 3, 4, 5, 6 sind über die Kabel 7a, 7b, 7c bzw. 8, 9 mit einer elektrischen Stromquelle 7 verbunden. Die Erfindung schließt nicht aus, daß das Handdensitometer 3 vom Typ des Reflexions-Densitometers durch ein Densitometer anderer Art ersetzt wird, dessen in Form von Impulsen ausgegebene Meßwerte von den mit diesem verbundenen Geräten 4, 5, 6 verarbeitet werden. Anstatt die Schnittstelle (RS 232 C) mit dem Drucker 4 zu verbinden, kann der letztere auch mit dem Rechner 5 zu einem Gerät zusammengefaßt sein.

Um eine praktisch sofortige Interpretation der aufgenommenen Meßwerte zu ermöglichen, erscheinen diese gemäß der Erfindung auf dem Bildschirm 6 mit Bezug auf eine Linie 0 als Streifen in einem oberen positiven Feld und einem unteren negativen Feld, wobei die entsprechenden zulässigen Toleranzbereiche durch die Bänder 6b, 6c angezeigt werden, so daß die "Punkte" 6d, welche außerhalb dieser Bänder 6b, 6c fallen, sofort erkannt werden; im übrigen erscheint für jeden Meßwert der Meßort 6e.

Die einzelnen Komponenten 4, 5, 6 können erfindungsgemäß auch konstruktiv so verbunden sein, daß sie einen einzigen, eventuell mit der Auflageplatte 1b zusammengefaßten, in dem Raum unterhalb derselben angeordneten Block bilden; außerdem erlaubt die erfindungsgemäße Einrichtung unterschiedliche Verbindungen zwischen den elektronischen Geräten 4, 2, 5, 6 und dem Handdensitometer 3.

**Patentansprüche**

1. Einrichtung zum Aufnehmen densitometrischer Werte von einem densitometrischen Kontrollstreifen (1), mit einem Auflagetisch (1b), daran vorgesehenen Marken zum Ausrichten eines Kontrollstreifenträgers, einem relativ zu dem Kontrollstreifen (1) bewegbaren Densitometer (3) und einer Auswerteeinrichtung (4, 5, 6), dadurch gekennzeichnet, daß dem Auflagetisch (1b) eine Anordnung (2) von Absolutpositionsgebern (2a) mit einem dem Verlauf des Kontrollstreifens entsprechenden Verlauf so zugeordnet ist, daß die Absolutpositionsgeber (2a) durch das über den Kontrollstreifen (1) geführte Densitometer (3) zur Abgabe eines Absolutpositionssignals aktivierbar sind, welches der Auswerteeinrichtung (4, 5, 6) zwecks Positionsauswertung zugeführt wird.

2. Einrichtung nach Anspruch 1, dadurch gekennzeichnet, daß am Densitometer (3) nahe seinem Lesekopf ein Magnet (3a) angeordnet ist und daß die Absolutpositionsgeber (2a) mit der Auswerteeinrichtung (4, 5, 6) elektrisch verbundene elektromagnetische Sensoren sind.

3. Einrichtung nach Anspruch 1 oder 2, dadurch gekennzeichnet, daß die Absolutpositionsgeber (2a) unterhalb des Auflagetisches (1b) und in einer Reihe parallel zu dem Kontrollstreifen (1) angeordnet sind.

4. Einrichtung nach einem der Ansprüche 1 bis 3, dadurch gekennzeichnet, daß die Marken (1a) optische Markierungen sind.

5. Einrichtung nach einem der Ansprüche 1 bis 3, dadurch gekennzeichnet, daß die Marken (1a) durch Anschläge gebildet sind.

6. Einrichtung nach einem der Ansprüche 1 bis 5, dadurch gekennzeichnet, daß das Densitometer (3) ein Handdensitometer ist, welches an eine stationäre Auswerteeinrichtung (4, 5, 6) angeschlossen ist.

**Patentansprüche**

1. Apparatus for sensing densitometric values of a densitometric control strip (1), with a supporting table (1b), marking provided thereon for aligning a control strip support, a densitometer (3) movable relative to the control strip (1) and an evaluation device (4, 5, 6) characterized in that the supporting table (1b) is associated with an arrangement (2) of absolute position generators (2a) with an arrangement corresponding to the arrangement of the control strip in such a manner that the absolute position generators (2a) are activatable by the densitometer (3) moved over the control strip (1) to emit an absolute position signal which is supplied to the evaluation device (4, 5, 6) for position evaluation.

2. Apparatus according to claim 1, characterized in that a magnet (3a) is mounted on the densitometer (3) near its read head, and in that the absolute position generators (2a) are electromagnetic sensors electrically connected with the evaluation device (4, 5, 6).

3. Apparatus according to claim 1 or 2, characterized in that the absolute position generators (2a) are mounted under the supporting table (1b) and in a row parallel with the control strip (1).

4. Apparatus according to one of claims 1 to 3, characterized in that the markings (1a) are optical markings.

5. Apparatus according to one of claims 1 to 3, characterized in that the markings (1a) are formed by stops.

6. Apparatus according to one of claims 1 to 5, characterized in that the densitometer (3) is a manual densitometer which is connected to a stationary evaluation device (4, 5, 6).

**Revendications**

1. Dipositif pour l'enregistrement de valeurs densitométriques d'une bande de contrôle (1) densitométrique, comprenant un plateau porteur (1b) sur lequel sont prévues des marques pour l'alignement d'un porte-bande de contrôle, un densitomètre (3) déplaçable par rapport à la bande de contrôle (1) et un dispositif d'évaluation (4, 5, 6), caractérisé en ce qu'un agencement (2) d'indicateurs (2a) de position absolue ayant une séquence correspondante à la séquence de la bande de contrôle est associé au plateau-porteur (1b) de la facon que les indicateurs (2a) de position absolue sont activables par le densitomètre (3) déplacé au-dessous de la bande de contrôle (1) pour la fourniture d'un signal de position absolue qui est conduit au dispositif d'évaluation (4, 5, 6) en vue de l'évaluation de la position.

2. Dispositif selon la revendication 1, caractérisé en ce qu'un aimant (3a) est disposé sur le densitomètre (3) à proximité de sa tête de lecture et en ce que les indicateurs (2a) de position absolue sont des capteurs électromagnétiques reliés électriquement au dispositif d'évaluation (4, 5, 6).

3. Dispositif selon la revendication 1 ou 2, caractérisé en ce que les indicateurs (2a) de position absolue sont disposés sous le plateauporteur (1b) en une rangée parallèle à la bande de contrôle (1).

4. Dispositif selon une des revendications 1 à 3, caractérisé en ce que les marques (1a) sont des marques optiques.

5. Dispositif selon une des revendications 1 à 3, caractérisé en ce que les marques (1a) sont constituées par des butées d'arrêt.

6. Dispositif selon une des revendications 1 à 5, caractérisé en ce que le densitomètre (3) est un densitomètre manuel déplaçable qui est raccordé à un dispositif d'évaluation (4, 5, 6) stationnaire.